# EUROPÄISCHE PATENTSCHRIFT

(11) **EP 0 707 884 B1**
(45) Veröffentlichungstag und Bekanntmachung des Hinweises auf die Patenterteilung: **13.06.2001**
(21) Anmeldenummer: 95112669.7
(22) Anmeldetag: 11.08.1995
(51) Int. Cl.: B01D 63/08, B01D 65/00

(54) **Vorrichtung zum Filtern und Trennen von insbesondere biologisch-organischen Strömungsmedien mittels nach Art von Membrankissen ausgebildeten Filterelementen**
Filtration and separation apparatus, especially for biological-organic fluids with filter elements in the form of membrane pads
Appareil de filtration et de séparation de fluides, notamment de fluides biologiques-organiques, pourvu d'éléments filtrants sous forme de coussins à membranes

(30) Priorität: 21.10.1994 DE 9416938 U; 09.11.1994 DE 4439982
(43) Veröffentlichungstag der Anmeldung: 24.04.1996
(73) Patentinhaber: Rochem Ultrafiltrations Systeme Gesellschaft für Abwasserreinigung mbH, 20355 Hamburg (DE)
(72) Erfinder: Mohn, Jürgen, D-22081 Reinbek (DE); Heine, Wilhelm, D-21077 Hamburg (DE); Rautenbach, Robert, Prof. Dr. Ing., NL-6291 BP Vaals (NL); Mellis, Rainer, Dr. Ing., D-52074 Aachen (DE); Vossenkaul, Klaus, Dipl. Ing., D-52062 Aachen (DE)
(74) Vertreter: Niedmers, Ole, Dipl.-Phys.

(56) Entgegenhaltungen:
- EP-A- 0 531 576
- DE-A- 3 347 283
- DE-U- 8 709 105
- DE-U- 9 402 676

## Beschreibung

Die Erfindung betrifft eine Vorrichtung zum Filtern und Trennen von insbesondere biologisch organischen Strömungsmedien durch Umkehrosmose sowie Mirko-, Ultra- und Nanofilteration mit einem druckdichten Gehäuse mit einem Einlaß für das Strömungsmedium und Auslässen für das Retentat sowie das Permeat und einer Mehrzahl im Gehäuse aufgenommener, voneinander beabstandeter Filterelemente, die nach Art eines Membrankissens ausgebildet sind, und die vom Strömungsmedium umflossen werden, wobei im Gehäuse eine Mehrzahl von gesonderten Stapeln von Membrankissen hinter- oder nebeneinander angeordnet ist und wobei die Stapel hintereinander oder nebeneinander vom Strömungsmedium umflossen werden.

Eine Vorrichtung dieser Art ist beispielsweise aus der DE-U-94 02 676 bekannt. Bei dieser Vorrichtung werden die Membrankissen derart angeordnet, daß ein Membranstapel kraftschlüssig zwischen zwei halbkreisförmigen Schalenelementen aufgenommen wird, und zwar derart, daß die Membrankissen darin im Zusammenwirken mit jeweils zwischen den Membrankissen angeordneten Abstandselementen aufgenommen werden. Um dabei sicherzustellen, daß die jeweiligen Membrankissen, die vom Strömungsmedium beidseitig vollflächig umflossen werden sollen, mit einer so gering wie möglichen Fläche auf den Abstandselementen bzw. auf der jeweiligen Bodenfläche der Schalenelemente aufliegt, sind auf den Oberflächen des Abstandselements und/oder auf den Bodenflächen eine Mehrzahl von von den Oberflächen vorstehenden Vorsprüngen vorgesehen, so daß das Membrankissen jeweils nur punktuell mit den jeweils angrenzenden Abstandselementen bzw. Bodenflächen der Schalenelemente in Berührung kommt. bekannte Vorrichtung, die zum Zwecke der Meerwasserentsalzung konzipiert worden ist, hat sich dort als hervorragend geeignet erwiesen, da damit die Partialdruckdifferenzen des Strömungsmediums zwischen Zulauf und Ablauf gering gehalten werden konnten.

Es hat sich aber gezeigt, daß die Art der Stapelung der bekannten Vorrichtung mit jeweils zwischen zwei gesonderten Abstandselementen angeordneten Membrankissen jedenfalls für die Trennung von biologisch organischen Strömungsmedien weniger geeignet ist.

Bei einer anderen bekannten Vorrichtung (DE-C-37 15 183) wird das zu trennende Strömungsmedium in einen Einlaß der Vorrichtung gegeben und durchströmt dann in strenger Regelmäßigkeit das zwischen zwei Abstandselementen angeordnete Membrankissen abwechselnd von außen nach innen und dann von innen nach außen, bis es in angereicherter Form nach entsprechendem Umströmen aller Membrankissen die Vorrichtung als angereichertes Retentat verläßt. Die Abstandselemente sind dabei kreisscheibenförmig ausgebildet, das Membrankissen kann ebenfalls kreisscheibenförmig ausgebildet sein oder aber zur Annäherung an eine kreisförmige Fläche eine n-eckige Kontur aufweisen.

Die bekannte Vorrichtung liefert für bestimmte Anwendungsfälle wie die Meerwasserentsalzung, d.h. zur Gewinnung von Trinkwasser aus Meerwasser sehr gute Ergebnisse, wobei sich bei der bekannten Vorrichtung auch bei großen Filterelementenstapeln die Partialdruckdifferenzen des Strömungsmediums zwischen Zulauf und Ablauf in vertretbaren Grenzen halten.

Wenn jedoch Strömungsmedien, beispielsweise Flüssigkeiten mit sehr hohem Anteil an biologisch organischen und/oder auch anorganischen Inhaltsstoffen getrennt werden sollen, kann sich dort nachteiligerweise jedoch sehr schnell ein Filterkuchen ausbilden, d.h. die Inhaltsstoffe setzen sich auf dem Membrankissen bzw. an den Stellen des Abstandselementes ab, in denen die Strömungsgeschwindigkeit des Strömungsmediums niedriger als an sonstigen anderen Stellen der Vorrichtung ist, oder an den Vorsprüngen, die erhaben von den Oberflächen der Abstandselemente wegstehen. Die Folge ist, daß die Vorrichtung ihre Trennwirksamkeit verliert und demontiert und gegebenenfalls auf aufwendige Weise gereinigt werden muß. Diese Prozedur ist nachteilig und regelmäßig auch nicht durchführbar, da für viele Anwendungen die Vorrichtung nahezu wartungsfrei funktionieren muß, da eine Unterbrechung der Funktion der Vorrichtung für Reinigungs-, Wartungs- und Austauschzwecke mit schwerwiegenden ökologischen und wirtschaftlichen Folgen verbunden ist.

Es ist Aufgabe der vorliegenden Erfindung, eine Vorrichtung der eingangs genannten Art zu schaffen, die in der Lage ist, Flüssigkeiten mit einem hohen biologisch organischen und/oder auch anorganischen Anteil an Inhaltstoffen zu trennen, wobei keine Ablagerungen in Form eines Filterkuchens während des Betriebes vonstatten gehen sollen, und wobei die Vorrichtung, falls es erforderlich sein sollte, auf einfache Weise zu reinigen und zu warten ist und daß die Vorrichtung einfach und kostengünstig herstellbar ist und ohne weiteres an den individuellen Belastungsgrad der zu trennenden Flüssigkeiten angepaßt werden kann.

Gelöst wird die Aufgabe gemäß der Erfindung dadurch, daß in den Membrankissen zwischen den diese jeweils begrenzenden äußeren Membranelementen jeweils ein flächiges Stabilisierungselement zur Schaffung einer hohen Eigenstabilität des Membrankissens angeordnet ist, derart, daß sich die Membrankissen während des Betriebes nicht berühren.

Der Vorteil der erfindungsgemäßen Vorrichtung besteht im wesentlichen darin, daß durch die erfindungsgemäß vorgeschlagene Anordnung der Stapel von voneinander beabstandeten Membrankissen innerhalb der Vorrichtung, d.h. innerhalb des Gehäuses, quasi ein offener Kanal für das Strömungsmedium geschaffen wird, mit dem, anders als beim eingangs genannten Stand der Technik, extrem hohe Strömungsgeschwindigkeiten des Strömungsmediums zwischen dem Einlaß des Strömungsmediums und dem Auslaß des die Vorrichtung als Retentat verlassenden Strömungsmediums möglich sind und somit die Bildung von Ablagerungen beispielsweise in Form eines Filterkuchens ausgeschlossen ist, da die Stapel von Membrankissen faktisch für das längskanalartig fließende Strömungsmedium keine Totzonen aufweisen und das Strömungsmedium quasi umlenkungsfrei vom Einlaß zum Auslaß der Vorrichtung strömen kann.

Je nach Art der verwendeten Werkstoffe, insbesondere der äußeren Membranelemente des Membrankissens, sind die Membrankissen mehr oder weniger stabil. Um zu verhindern, daß sich die Membrankissen des Membrankissenstapel während des Betriebes der Vorrichtung berühren, wodurch wiederum Ablagerungszellen von Inhaltstoffen des Strömungsmediums gebildet werden können, die die Trennwirkung der Membrankissen zunehmend verschlechtern können, wird in den Membrankissen zwischen den diese begrenzenden äußeren Membranelementen ein flächiges Stabilisierungselement vorgesehen.

Die erfindungsgemäß vorgeschlagenen quasi offenen Kanäle für das Strömungsmedium sowie die totzonen- und umlenkungsfreie Strömungsführung gewährleistet eine Minimierung des Druckverlustes der Vorrichtung.

Es ist vorteilhaft, das Stabilisierungselement im umlaufenden Randbereich beidseitig angeschrägt auszubilden, was einerseits zu einem besseren Anströmverhalten des Strömungsmediums im Randbereich des Membrankissens führt und andererseits eine Beschädigung der äußeren Membranelemente des Membrankissens durch scharfe Kanten vermeidet.

Hinzukommender Vorteil eines solchen innerhalb des Membrankissens angeordneten Stabilisierungselementes ist die dadurch zustande kommende Ausbildung eines Strömungskanals mit beidseitig angeordneten Membranelementen. Damit verbunden ist eine Reduzierung des spezifischen Energiebedarfs (Energiebedarf pro m³ Permeat) im Vergleich zu bisher bekannten Vorrichtungen möglich.

Das Stabilisierungselement ist vorteilhafterweise aus Kunststoff ausgebildet, grundsätzlich sind aber beliebige andere geeignete Materialien, beispielsweise Verbundwerkstoffe oder auch Metall geeignet. Die Wahl des Werkstoffs des Stabilisierungselements hängt im wesentlichen von der Art des Strömungsmediums bzw. des Drucks, bei dem die Vorrichtung in bezug auf das Strömungsmedium betrieben wird, ab.

Es hat sich als vorteilhaft herausgestellt, zur äußeren Beabstandung der Membrankissen streifenförmige Abstandselemente vorzusehen, obwohl es grundsätzlich auch möglich ist, jeweils um die Permeatabflußöffnungen der Membrankissen herum ringförmige Abstandselemente vorzusehen. Ein streifenförmiges Abstandselement hat gegebenenfalls den Vorteil, daß die Montage des Membrankissenstapels erleichtert wird.

Gemäß einer vorteilhaften Ausgestaltung der Vorrichtung werden die Stapel jeweils von zwei die Stapel in sich einschließenden, im Außenquerschnitt im wesentlichen halbkreisförmigen Schalenelementen aufgenommen. Dadurch ist es möglich, die Stapel zwischen den Schalenelementen gewissermaßen aus voneinander beabstandeten Membrankissen vorzukonfektionieren, so daß die Stapel lediglich im Gehäuse der Vorrichtung aneinandergesetzt zu werden brauchen, und zwar in bezug auf die Menge der Stapel in Abhängigkeit von dem Belastungsgrad der zu trennenden Flüssigkeit.

Um die Anzahl der Einzelteile der Vorrichtung auch unter dem Gesichtspunkt des Zieles einer möglichst kostengünstigen Bereitstellbarkeit gering zu halten, ist es vorteilhaft, daß wenigstens eines der Schalenelemente einen das Schalenelement in Längsrichtung durchquerenden Permeatabflußkanal aufweist, der mit Permeatabflußöffnungen, die in den Innenbodenbereich der Schalenelemente münden, verbunden ist. Durch die Ausgestaltung ist gewissermaßen der Permeatabflußkanal integral mit den Schalenelementen ausgebildet.

Vorzugsweise ist der Innenquerschnitt der Schalenelemente im wesentlichen rechteckig ausgebildet, und zwar mit derart gewählten Abmaßen, daß der Membranstapel kraftschlüssig zwischen zwei in bezug auf ihre Außenkontur halbkreisförmigen Schalenelementen aufgenommen wird, d.h. die Membrankissen werden darin derart im Zusammenwirken mit den dazwischen angeordneten Abstandselementen aufgenommen, daß keine zusätzlichen Spannbolzen, die die Membrankissen und die Abstandselemente beim erwähnten Stand der Technik durchqueren, nötig sind.

Diese kraftschlüssige Aufnahme des Stapels aus Membrankissen sowie diese beabstandenden Abstandselemente zwischen den Schalenelementen kann vorteilhafterweise dadurch erreicht werden, daß die Schalenelemente unter Einschluß des jeweiligen Stapels durch Verbindungsmittel lösbar verbindbar sind, beispielsweise mittels einer Bolzen-Mutter-Verbindung.

Gemäß einer vorteilhaften weiteren Ausgestaltung der Vorrichtung ist eine aus zwei miteinander verbundenen Schalenelementen gebildete Stapelschale mit einer benachbarten Stapelschale über eine in den Stapelschalen ausgebildete Renkverbindung lösbar verbindbar, d.h. die aneinandergesetzten Stapelschalen können somit auf einfache Weise kraftschlüssig miteinander verbunden werden, wobei auch bei dieser Ausgestaltung einer Verbindung der Stapelschalen untereinander eine beliebige geeignete Menge an Stapelschalen aneinandergesetzt werden kann, und zwar in Abhängigkeit des Anteils der Inhaltsstoffe in der zu trennenden Flüssigkeit bzw. aufgrund anderer notwendiger Vorgaben für den mit der Vorrichtung zu erreichenden Trenngrad.

Zwei benachbarte Stapelschalen können jeweils im verbundenen Zustand mittels eines Verbindungsmittels lösbar gesichert werden, und zwar beispielsweise ebenfalls mittels einer Bolzen-Mutter-Verbindung. Diese Sicherungsmöglichkeit ermöglicht es auch, eine bestimmte Mehrzahl von Stapelschalen für den Einbau in das Gehäuse der Vorrichtung vollständig vorzukonfektionieren.

Das Abstandselement und/oder das Schalenelement können, obwohl beide Elemente grundsätzlich aus beliebigen geeigneten Werkstoffen hergestellt werden können, vorzugsweise aus Kunststoff hergestellt werden, so daß diese Teile auf einfache und kostengünstige Weise beispielsweise in einem Spritzgußherstellungsschritt hergestellt werden können mit der Folge, daß diese als Massenprodukte kostengünstig bereitstellbar sind.

Als Kunststoff wird dabei vorzugsweise Polystyrol, Acrylnitril-Butadien-Styrol-Copolymere (ABS) oder Styrol-Acrylnitril-Copolymere (SAN) verwendet.

Die Erfindung wird nun unter Bezugnahme auf die schematischen Zeichnungen anhand eines Ausführungsbeispieles im einzelnen beschrieben. Darin zeigen:

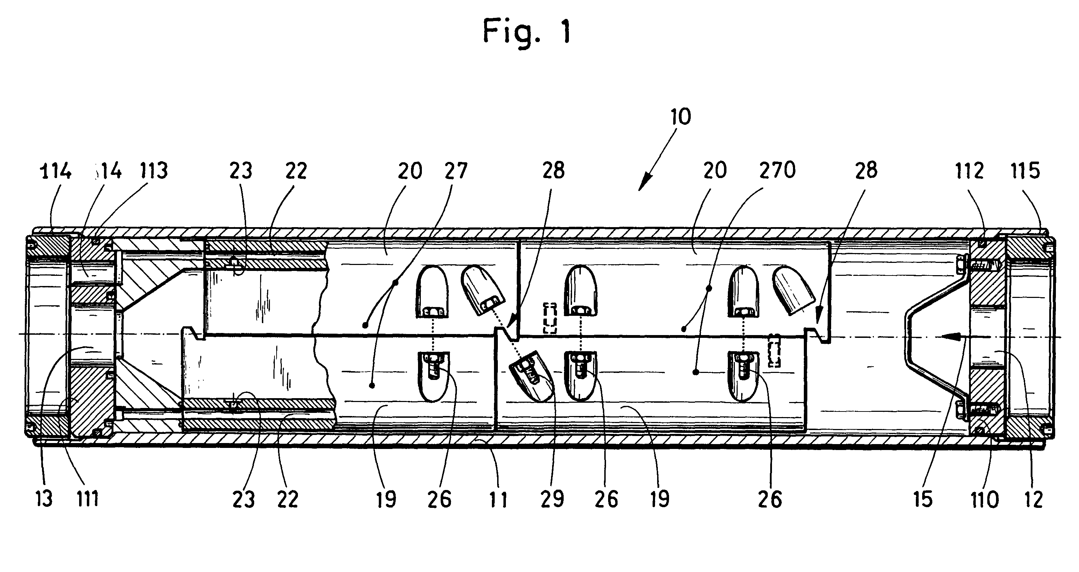

- Fig. 1: in der Seitenansicht und teilweise im Schnitt eine Vorrichtung mit zwei Stapelschalen, in denen jeweils ein Stapel aus voneinander beabstandeten Membrankissen angeordnet wird,
- Fig. 2: in der Ansicht quer zur Darstellung von Figur 1 einen teilweisen Schnitt durch ein Schalenelement,
- Fig. 3: eine Draufsicht auf das in Figur 2 dargestellte Schalenelement,
- Fig. 4: einen Längsschnitt durch das in Figur 3 dargestellte Schalenelement,
- Fig. 5: eine Ansicht auf ein Schalenelement in der Ansicht von oben gemäß der Darstellung von Figur 1,
- Fig. 6: in der Seitenansicht die Darstellung des Schalenelements gemäß Figur 5,
- Fig. 7: einen schematischen Schnitt durch eine aus zwei Schalenelementen gebildete Stapelschale im in das Gehäuse eingebrachten Zustand,
- Fig. 8: in der Ansicht quer zur Darstellung von Fig. 1 einen teilweisen Schnitt durch ein Schalenelement mit eingesetztem Membrankissenstapel, wobei die Membrankissen über streifenförmige Abstandselemente voneinander beabstandet sind, unter darstellerischer Weglassung einiger Membrankissen,
- Fig. 9: eine Draufsicht auf ein Membrankissen,
- Fig. 10 a: eine Draufsicht auf ein Stabilisierungselement, das zwischen den äußeren Membranelementen des Membrankissens eingelegt ist,

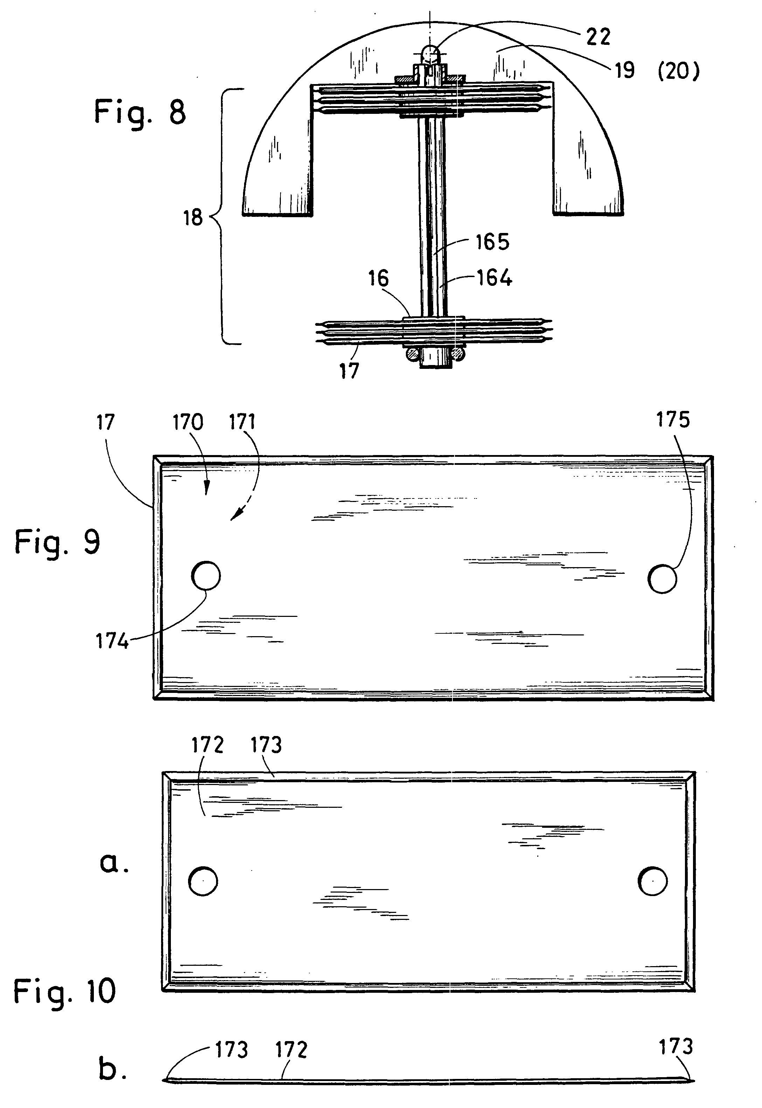

- Fig. 10 b: eine Seitenansicht des in Fig. 10 a dargestellten Stabilisierungselements,

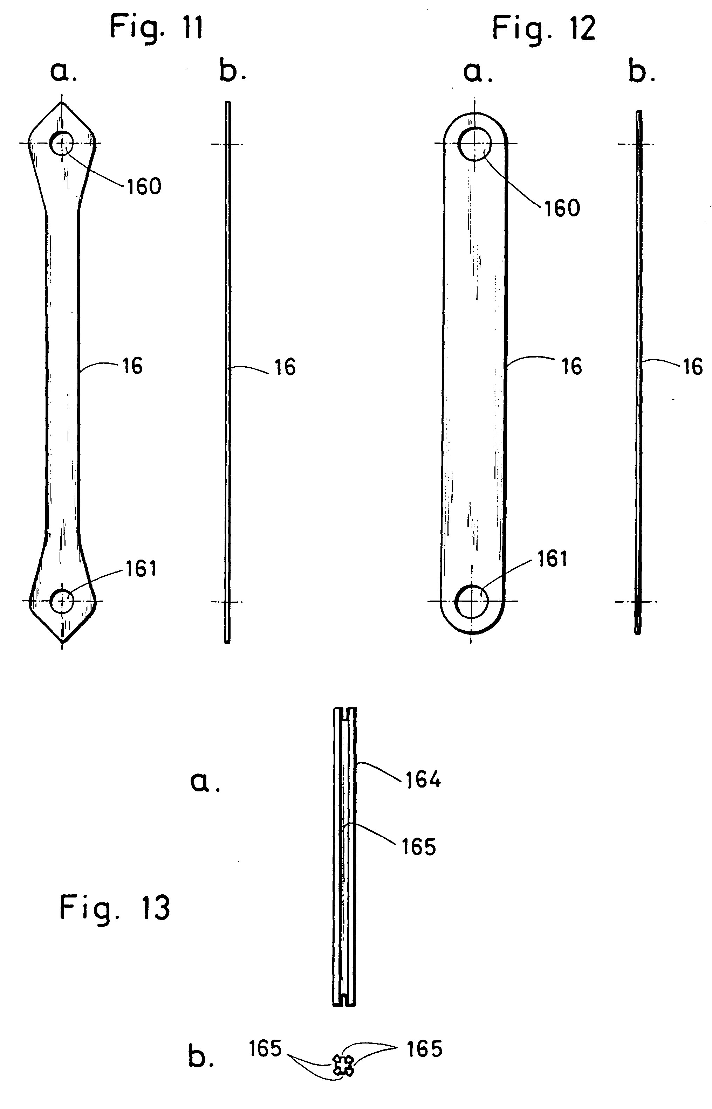

- Fig. 11 a: in der Draufsicht ein Abstandselement,
- Fig. 11 b: in der Seitenansicht das Abstandselement gemäß Fig. 11 a,
- Fig. 12 a: in der Draufsicht eine andere Ausführungsform eines Abstandselements,
- Fig. 12 b: eine Seitenansicht des in Fig. 12 a dargestellten Abstandselements,
- Fig. 13 a: eine Seitenansicht eines Ablaufbolzens und
- Fig. 13 b: eine Draufsicht des in Fig. 13 a dargestellten Ablaufbolzens.

Die Vorrichtung 10 besteht im wesentlichen aus einem Gehäuse 11, das auf an sich bekannte Weise beidseitig mit Endelementen 110, 111 druckdicht über umlaufende Dichtungsmittel 112, 113, beispielsweise in Form sogenannter 0-Ringe, gegenüber dem Gehäuse 11 verschlossen ist. Im Endelement 110 ist ein Einlaß 12 für das zur Vorrichtung 10 zuzuführende Strömungsmedium 15 vorgesehen. Im Endelement 111 ist ein Auslaß 13 für das angereicherte Strömungsmedium, das sogenannte Retentat, vorgesehen und ein Auslaß 14 für das Permeat. Die Endelemente 110 111 werden über Ringelemente 114, 115, die ein Außengewinde haben, in ihrer Position im Gehäuse 11 gesichert, wobei das Gehäuse 11 an den betreffenden Stellen des Eingriffs der Ringelemente 114, 115 ein Innengewinde aufweist. Das Gehäuse 11 weist vorzugsweise einen kreisförmigen Querschnitt auf, dieses ist jedoch nicht für alle Fälle zwingend.

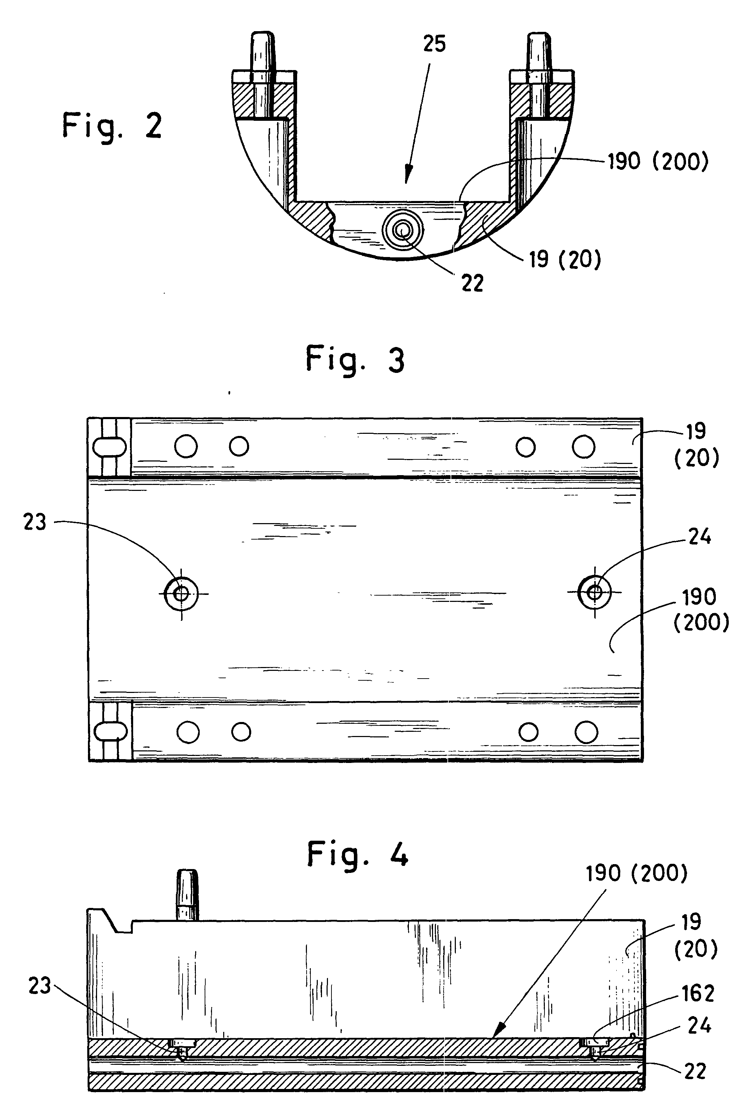

Im Gehäuse 11 ist eine Mehrzahl von Stapelschalen 27, 270 vorgesehen, wobei im Beispiel gemäß Figur 2 zwei Stapelschalen 27, 270 vorgesehen sind. Es sei darauf hingewiesen, daß die Anzahl der Stapelschalen 27 pro Vorrichtung 10 beliebig in Abhängigkeit der Länge des Gehäuses 11 variiert werden kann, und zwar in Abhängigkeit der Art der zu trennenden Flüssigkeit bzw. der Art und des Umfanges der darin enthaltenen organischen und/oder anorganischen Inhaltsstoffe.

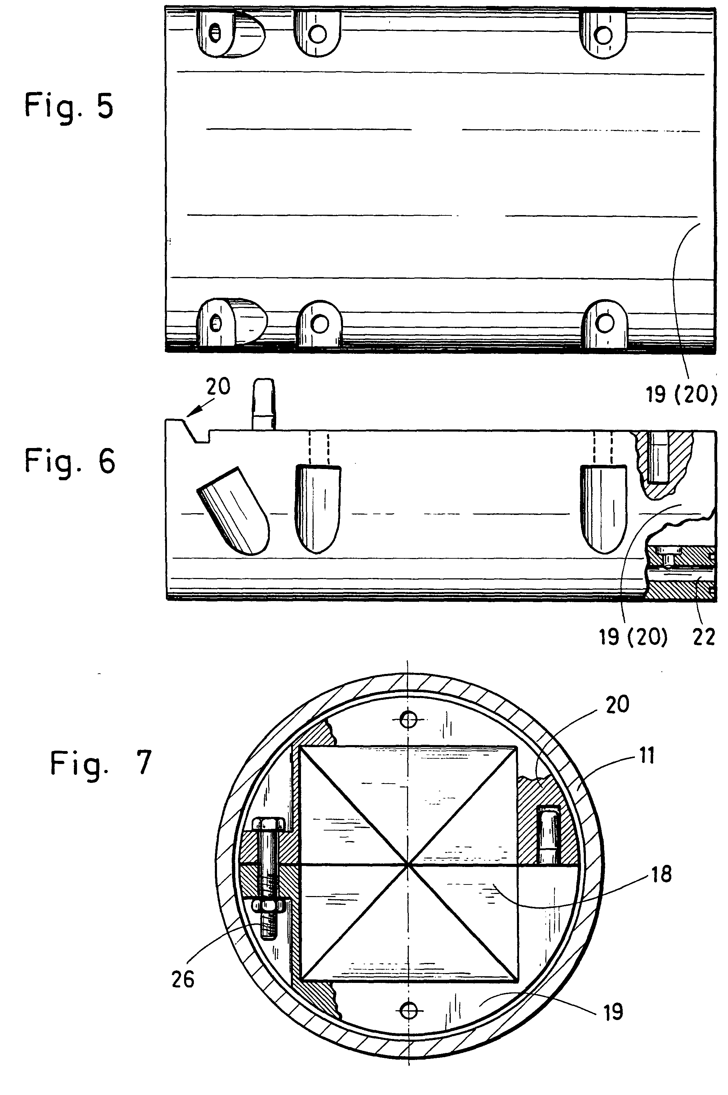

Die Stapelschalen 27 sind alle identisch, so daß im folgenden lediglich eine Stapelschale 27 beschrieben wird. Eine Stapelschale 27 besteht aus zwei Schalenelementen 19, 20, vergleiche Figur 7 und 8. Die Schalenelemente 19, 20 weisen einen im wesentlichen halbkreisförmigen Außenquerschnitt auf. Der Innenquerschnitt der Schalenelemente 19, 20 ist im wesentlichen rechteckig ausgebildet, wobei zwei miteinander verbundene Schalenelemente 19, 20, vergleiche Figur 7, einen annähernd quadratischen bzw. rechteckigen Innenquerschnitt aufweisen. Die Schalenelemente 19, 20 können mittels Verbindungsmitteln 26, beispielsweise mittels einer Bolzen-Mutter-Verbindung, lösbar verbunden werden. Zwei Schalenelemente 19, 20 schließen in sich kraftschlüssig einen Stapel 18 ein, der durch eine Mehrzahl von Abstandselementen 16, vergleiche die Figuren 8, gebildet wird und durch Membrankissen 17, die jeweils zwischen zwei Abstandselementen 16 angeordnet sind. Membrankissen 17 derart, wie sie in der Vorrichtung 10 zur Bildung des Stapels 18 zusammen mit den Abstandselementen 16 verwendet werden, sind beispielsweise in der EP-B-0 129 663 beschrieben. Die gemäß der Erfindung in der Vorrichtung 10 verwendeten, an sich bekannten Membrankissen 17 weisen einen in dem vorerwähnten vorveröffentlichten Dokument beschriebenen bekannten Aufbau auf, so daß bezüglich des Aufbaus dieser Membrankissen 17 auf das vorerwähnte vorveröffentlichte Dokument verwiesen wird. Die bekannten Membrankissen 17 sind bei der Vorrichtung 10 jedoch dahingehend modifiziert, daß zwischen den das Membrankissen 17 äußerlich begrenzenden eigentlichen Membranelementen 170, 171 ein flächiges Stabilisierungselement 172 angeordnet ist. Das Stabilisierungselement 172, das aus Kunststoff, Metall oder einem beliebigen anderen Werkstoff bestehen kann, ist im umlaufenden Randbereich 173 beidseitig abgeschrägt ausgebildet, um für das Strömungsmedium 15 eine geeignetere Anströmkante zu bilden. Durch den hier verwendeten modifizierten Aufbau des Membrankissens 17 weist dieses eine hohe Eigenstabilität auf.

Die Abstandselemente 16 weisen eine im wesentlichen streifenförmige Form auf, vergleiche Fig. 11 und 12. In Längsrichtung sind im Abstandselement 16 zwei voneinander beabstandete Öffnungen 160, 161 vorgesehen. Das Abstandselement 16 selbst besteht vorteilhafterweise aus Gummi oder aus einem beliebigen geeigneten Kunststoff, vergleiche beispielsweise die Fig. 11 a, b und 12 a, b. Das Abstandselement weist Öffnungen 160, 161 auf, die sich mit den Permeatabflußöffnungen 174, 175 der Membrankissen 17 decken, vergleiche auch Fig. 8. Das Abstandselement 16 hat dichtende Wirkung gegenüber zwei Membrankissen 17, zwischen denen es eingeschlossenen ist und legt den Abstand zwischen den beiden benachbarten Federelementen 17 entsprechend seiner Dicke fest. Im Zustand eines Stapels 18 aus Membrankissen 17 gemäß der Darstellung von Figur 8 kann kein Strömungsmedium 15 zu den Permeatabflußlöchern 174, 175 aufgrund der dichtenden Wirkung der Abstandselemente 16 gelangen.

Die Permeatablauföffnungen 23, 24 in den Schalenelementen 19, 20, die in Längsrichtung einen gleichen Abstand voneinander haben wie die Öffnungen 160, 161 der Abstandselemente 16, münden in einen in Längsrichtung die Schalenelemente 19, 20 durchquerenden Permeatabflußkanal 22. Der in den Fig. 13 a, b dargestellte Ablaufbolzen 164 durchquert, vergleiche Fig. 8, den gesamten Stapel 18 aus Membrankissen 17 und Abstandselementen 16. Der Ablaufbolzen 164 weist in axialer Richtung eine Mehrzahl von Permeatablaufrinnen 165 auf, über die das Permeat, das aus den Membrankissen 17, über deren Permeatablauföffnungen 174, 175 austritt, abfließt und in die Permeatablauföffnungen 23, 24 der Schalenelemente 19, 20 eintritt.

Der vorbeschriebene Stapel 18 wird somit über die Verbindungsmittel 26 kraftschlüssig zwischen zwei Schalenelementen 19, 20 eingeschlossen, wobei im verbundenen Zustand der Schalenelemente 19, 20 gewährleistet ist, daß von den Membrankissen 17 das getrennte Permeat 17 stirnseitig aus den Permeataustrittsöffnungen der Membrankissen 17 über die Öffnung in 160, 161 der Abstandselemente 16, über die Permeatablaufrinnen 165 der Ablaufbolzen 164 und über die Permeatablauföffnungen 23, 24 der Schalenelemente 19, 20 ablaufen und im Permeatabflußkanal 22 gesammelt werden kann und von dort zum Auslaß 14 der Vorrichtung 10 geleitet werden kann.

Zwei benachbarte Stapelschalen 27, 270 gemäß dem vorgeschriebenen Aufbau können jeweils über in den Stapelschalen 27, 270 ausgebildete Renkverbindungen 28 lösbar verbunden werden. Im verbundenen Zustand ist die Renkverbindung 28 zwischen zwei benachbarten Stapelschalen 27, 270 ebenfalls mittels eines Verbindungsmittels 29 lösbar verbindbar. Dieses Verbindungsmittel kann beispielsweise aus einer Bolzen-Mutter-Verbindung bestehen, ähnlich wie das Verbindungsmittel 26 zwischen den beiden Schalenelementen 19, 20.

Die Abstandselemente 16 und/oder die Schalenelemente 19, 20 können aus Kunststoff, vorzugsweise aus spritzfähigem Kunststoff bestehen. Der Kunststoff kann Polystyrol, Acrylnitril-Butadien-Styrol-Copolymere (ABS) oder Styrol-Acrylnitril-Copolymere (SAN) sein. Das Abstandselement 16 kann auch aus Gummi bestehen.

Zur bestimmungsgemäßen Funktion der Vorrichtung 10 wird eine bestimmte Menge an Stapelschalen 27 vorbereitet, und zwar auf die vorbeschriebene Weise. Die fertig vorbereiteten, d.h. vorkonfektionierten Stapelschalen 27 unter jeweiligem Einschluß des Stapels 18 aus Abstandselementen 16, Ablaufbolzen 164 und Filterelementen 17 werden dann über die Renkverbindung 28 jeweils zwischen zwei Stapelschalen 27, 270 verbunden und mittels des Verbindungsmittels 29 gesichert. Nachfolgend wird die miteinander verbundene Mehrzahl von Stapelschalen 27 in eine Öffnung des Gehäuses 11 eingeführt, wobei sichergestellt wird, daß der Permeatabflußkanal 22 der Stapelschalen 27 untereinander druckdicht verbunden sind und von der letzten Stapelschale 27 in eine entsprechende Öffnung des die andere Gehäuseöffnung 111 abschließende Endelements 11 mündet. Nachfolgend wird das Gehäuse 11 durch das zweite Endelement 110 über das Ringelement 115 verschlossen, wobei sichergestellt ist, daß eine axiale Bewegung der Mehrzahl der miteinander verbundenen Stapelschalen 27 im Gehäuse 11 nicht möglich ist. Nachfolgend wird zum bestimmungsgemäßen Gebrauch das Strömungsmedium 15 in die Vorrichtung 10 geführt und umströmt quasi in Form eines offenen Kanals alle hintereinander angeordneten Filterelemente 17 der jeweils hintereinander angeordneten Stapelschalen 27 bzw. der darin hintereinander angeordneten Stapel 18. Dadurch wird vom Einlaß 12 zum Auslaß 13 eine hohe Strömungsgeschwindigkeit des Strömungsmediums 15 erreicht. Das Permeat, das von den Membrankissen 17 auf bekannte Weise geliefert wird, fließt über die Öffnungen 160, 161 bzw. die Permeatablauföffnungen 23, 24 der Schalenelemente 19, 20 zum Permeatabflußkanal 22 und von dort zum vorrichtungsseitigen Auslaß 14 und wird von dort einer weiteren Verwendung zugeführt.

### Bezugszeichenliste

- 10: Vorrichtung
- 11: Gehäuse
- 110: Endelement
- 111: Endelement
- 112: Dichtungsmittel
- 113: Dichtungsmittel
- 114: Ringelement
- 115: Ringelement
- 12: Einlaß
- 13: Auslaß (Retentat)
- 14: Auslaß (Permeat)
- 15: Strömungsmedium
- 16: Abstandselement
- 160: Öffnung
- 161: Öffnung
- 162: Vertiefung
- 163: Dichtelement
- 164: Ablaufbolzen
- 165: Permeatablaufrinne
- 166: Vorsprung
- 17: Filterelement (Membrankissen)
- 170: Membranelement
- 171: Membranelement
- 172: Stabilisierungselement
- 173: Randbereich
- 174: Permeatabflußöffnunq
- 175: Permeatabflußöffnunq
- 18: Stapel
- 19: Schalenelement
- 190: Bodenfläche
- 20: Schalenelement
- 200: Bodenfläche
- 21: Längsrichtung
- 22: Permeatabflußkanal
- 23: Permeatablauföffnung
- 24: Permeatablauföffnung
- 25: Innenbodenbereich
- 26: Verbindungsmittel
- 27: Stapelschale
- 270: Stapelschale
- 28: Renkverbindung
- 29: Verbindungsmittel

## Patentansprüche

1. Vorrichtung (10) zum Filtern und Trennen von insbesondere biologisch organischen Strömungsmedien (15) durch Umkehrosmose sowie Mikro-, Ultra- und Nanofiltration mit einem druckdichten Gehäuse (11) mit einem Einlaß (12) für das Strömungsmedium (15) und Auslässen (13,14) für das Retentat sowie das Permeat und einer Mehrzahl im Gehäuse (11) aufgenommener, voneinander beabstandeter Filterelemente (17), die nach Art eines Membrankissens ausgebildet sind und die vom Strömungsmedium (15) umflossen werden, wobei im Gehäuse (11) eine Mehrzahl von gesonderten Stapeln (18) von Membrankissen (17) hinter- oder nebeneinander angeordnet ist und wobei die Stapel (18) hintereinander oder nebeneinander vom Strömungsmedium umflossen werden, dadurch gekennzeichnet, daß in den Membrankissen (17) zwischen den diese jeweils begrenzenden äußeren Membranelementen (170, 171) jeweils ein flächiges, Stabilisierungselement (172) zur Schaffung einer hohen Eigenstabilität des Membrankissens (17) angeordnet ist, derart, daß sich die Membrankissen (17) während des Betriebes nicht berühren.

2. Vorrichtung nach Anspruch 1, dadurch gekennzeichnet, daß das Stabilisierungselement (172) im umlaufenden Randbereich (173) beidseitig abgeschrägt ausgebildet ist.

3. Vorrichtung nach einem oder beiden der Ansprüche 1 oder 2, dadurch gekennzeichnet, daß das Stabilisierungselement (172) aus Kunststoff besteht.

4. Vorrichtung nach einem oder mehreren der Ansprüche 1 bis 3, dadurch gekennzeichnet, daß zur äußeren Beabstandung der Membrankissen (17) streifenförmige Abstandselemente (16) vorgesehen sind.

5. Vorrichtung nach Anspruch 4, dadurch gekennzeichnet, daß die streifenförmigen Abstandselemente (16) dichtende Wirkung gegenüber einem Permeatabflußraum haben.

6. Vorrichtung nach einem der Ansprüche 1 bis 5, dadurch gekennzeichnet, daß die Stapel (18) einen flachen, offenen Rechteckausschnitt als Strömungsquerschnitt besitzen.

7. Vorrichtung nach einem oder mehreren der Ansprüche 1 bis 6, dadurch gekennzeichnet, daß die Stapel (18) jeweils von zwei die Stapel (18) in sich einschließenden, im Außenquerschnitt im wesentlichen halbkreisförmigen Schalenelementen (19, 20) aufgenommen werden.

8. Vorrichtung nach Anspruch 7, dadurch gekennzeichnet, daß wenigstens eines der Schalenelemente (19; 20) einen das Schalenelement (19; 20) in Längsrichtung (21) durchquerenden Permeatabflußkanal (22) aufweist, der mit Permeatabflußöffnungen (23, 24), die in den Innenbodenbereich (25) der Schalenelemente (19, 20) münden, verbunden ist.

9. Vorrichtung nach einem und mehreren der Ansprüche 7 oder 8, dadurch gekennzeichnet, daß der Innenquerschnitt der Schalenelemente (19, 20) im wesentlichen rechteckig ausgebildet ist.

10. Vorrichtung nach einem und mehreren der Ansprüche 7 bis 9, dadurch gekennzeichnet, daß die Schalenelemente (19, 20) unter Einschluß des jeweiligen Stapels (18) durch Verbindungsmittel (26) lösbar verbindbar sind.

11. Vorrichtung nach einem und mehreren der Ansprüche 7 bis 9, dadurch gekennzeichnet, daß eine aus zwei miteinander verbundenen Schalenelementen (19, 20) gebildete Stapelschale (27) mit einer benachbarten Stapelschale (270) über eine an den Stapelschalen (27, 270) ausgebildete Renkverbindung (28) lösbar verbindbar sind.

12. Vorrichtung nach Anspruch 11, dadurch gekennzeichnet, daß zwei benachbarte Stapelschalen (27, 270) im verbundenen Zustand mittels eines Verbindungsmittels (19) lösbar sicherbar sind.

13. Vorrichtung nach einem oder mehreren der Ansprüche 4 bis 12, dadurch gekennzeichnet, daß das Abstandselement (16) und/oder das Schalenelement (19, 20) aus Kunststoff besteht.

14. Vorrichtung nach Anspruch 13, dadurch gekennzeichnet, daß der Kunststoff Polystyrol ist.

15. Vorrichtung nach Anspruch 13, dadurch gekennzeichnet, daß der Kunststoff Acrylnitril-Butadien-Styrol-Copolymere (ABS) ist.

16. Vorrichtung nach Anspruch 13, dadurch gekennzeichnet, daß der Kunststoff Styrol-Acrylnitril-Copolymere (SAN) ist.

## Claims

1. Apparatus (10) for filtering and separating in particular biologically organic flowing media (15) by means of reverse osmosis and also micro-, ultra- and nano-filtration with a pressure-tight housing (11) with an inlet (12) for the flowing medium (15) and outlets (13,14) for the retentate and the permeate and a plurality of filter elements (17) accommodated in the housing (11) and at a distance apart from one another, constructed like a membrane cushion and around which the flowing medium (15) flows, whereby a plurality of separate stacks (18) of membrane cushions (17) is arranged behind one another or alongside one another in the housing (11) and whereby the flowing medium flows around the stacks (18) behind one another or alongside one another, characterized in that a flat stabilising element (172) is arranged in each of the membrane cushions (17) between the outer membrane elements (170, 171) that demarcate each of them to ensure that the membrane cushion (17) has a high intrinsic stability, in such a way that the membrane cushions (17) do not come into contact during operation.

2. Apparatus according to Claim 1, characterized in that the stabilising element (172) has a bevelled shape on both sides in the peripheral edge region (173).

3. Apparatus according to one or both of the Claims 1 or 2, characterized in that the stabilising element (172) consists of plastic.

4. Apparatus according to one or more of the Claims 1 to 3, characterized in that strip-shaped spacer elements (16) are provided to create external spacing of the membrane cushions (17).

5. Apparatus according to Claim 4, characterized in that the strip-shaped spacer elements (16) have a sealing action towards a permeate outflow space.

6. Apparatus according to one of the Claims 1 to 5, characterized in that the stacks (18) have a flat, open rectangular cut-out as a flow cross-section.

7. Apparatus according to one or more of the Claims 1 to 6, characterized in that the stacks (18) are each accommodated in two shell elements (19, 20) whose outer cross-section is essentially semicircular and which enclose the stacks within them (18).

8. Apparatus according to Claim 7, characterized in that at least one of the shell elements (19; 20) has a permeate outflow channel (22) that traverses the shell element (19; 20) in a longitudinal direction (21) and which is linked to permeate outflow openings (23, 24) opening into the inner base area (25) of the shell elements (19, 20).

9. Apparatus according to one and more of the Claims 7 or 8, characterized in that the inner cross-section of the shell elements (19, 20) has an essentially rectangular shape.

10. Apparatus according to one and more of the Claims 7 to 9, characterized in that the shell elements (19, 20) are detachably attachable via connector means (26) so as to enclose the respective stack (18).

11. Apparatus according to one and more of the Claims 7 to 9, characterized in that a stack shell (27) formed from two interlinked shell elements (19, 20) is detachably attachable to an adjacent stack shell (27) via a bayonet-type connector (28) constructed on the stack shells (27, 270).

12. Apparatus according to Claim 11 characterized in that, in the connected state, two neighbouring stack shells (27, 270) are detachably securable by means of a connector means (19).

13. Apparatus according to one or more of the Claims 4 to 12, characterized in that the spacer element (16) and/or the shell element (19, 20) consists of plastic.

14. Apparatus according to Claim 13, characterized in that the plastic is polystyrene.

15. Apparatus according to Claim 13, characterized in that the plastic is acrylonitrile-butadiene- styrene copolymer (ABS).

16. Apparatus according to Claim 13, characterized in that the plastic is styrene-acrylonitrile copolymer (SAN).

## Revendications

1. Dispositif (10) de filtration et de séparation de fluides (15), notamment de fluides biologiques-organiques, par osmose inverse ainsi que par micro-, ultra- et nanofiltration avec un boîtier (11) étanche présentant une admission (12) pour le fluide (15) et des évacuations (13, 14) pour le rétentat ainsi que le perméat, et une pluralité d'éléments filtrants (17) distants les uns des autres, disposés dans le boîtier (11), qui ont la forme de coussins à membranes et qui sont traversés par le fluide (15), dans lequel une pluralité de piles (18) séparées de coussins à membranes (17) sont disposées en série ou en parallèle dans le boîtier (11) et dans lequel les piles (18) sont traversées en série ou en parallèle par le fluide, caractérisé en ce que dans les coussins à membranes (17), entre les éléments membranes (170, 171) externes limitant chacun de ceux-ci, est disposé un élément plan de stabilisation (172) pour créer une stabilité intrinsèque élevée des coussins à membranes (17), de telle sorte que les coussins à membranes (17) ne se touchent pas pendant le fonctionnement.

2. Dispositif selon la revendication 1, caractérisé en ce que l'élément de stabilisation (172) est chanfreiné sur les deux faces, sur son pourtour (173).

3. Dispositif selon l'une ou les deux revendications 1 et 2, caractérisé en ce que l'élément de stabilisation (172) est en.matière plastique.

4. Dispositif selon l'une ou plusieurs des revendications 1 à 3, caractérisé en ce que l'on prévoit des élément d'espacement (16) en forme de bande pour l'espacement externe des coussins à membranes (17).

5. Dispositif selon la revendication 4, caractérisé en ce que les éléments d'espacement (16) en forme de bande ont un effet d'étanchéité vis-à-vis d'une chambre d'écoulement du perméat.

6. Dispositif selon l'une quelconque des revendications 1 à 5, caractérisé en ce que les piles (18) présentent une section rectangulaire plane, ouverte, comme coupe transversale de l'écoulement.

7. Dispositif selon l'une quelconque des revendications 1 à 6, caractérisé en ce que les piles (18) sont incorporées chaque fois par paire, dans les éléments coques (19, 20) sensiblement semi-circulaires en coupe transversale externe.

8. Dispositif selon la revendication 7, caractérisé en ce qu'au moins un élément coque (19, 20) présente un canal d'écoulement du perméat (22) traversant l'élément coque (19, 20) dans la direction longitudinale (21), lequel est relié aux orifices d'écoulement du perméat (23, 24), qui débouchent dans la partie de base interne (25) des éléments coques (19, 20).

9. Dispositif selon l'une ou plusieurs des revendications 7 et 8, caractérisé en ce que la coupe transversale interne des éléments coques (19, 20) est sensiblement rectangulaire.

10. Dispositif selon l'une ou plusieurs des revendications 7 à 9, caractérisé en ce que les éléments coques (19, 20), y compris les piles (18) respectives, peuvent être reliés de manière amovible à l'aide d'un moyen de connexion (26).

11. Dispositif selon l'une ou plusieurs des revendications 7 à 9, caractérisé en ce qu'une coque de pile (27), formée de deux éléments coques (19, 20) reliés l'un à l'autre, peut être reliée de manière amovible avec une coque de piles (270) voisine par une connexion à baïonnette (28) formée sur les coques de piles (27, 270).

12. Dispositif selon la revendication 11, caractérisé en ce que deux coques de piles (27, 270) voisines à l'état relié peuvent être fixées de manière amovible à l'aide d'un moyen de connexion (29).

13. Dispositif selon l'une ou plusieurs des revendications 4 à 12, caractérisé en ce que l'élément d'espacement (16) et/ou l'élément coque (19, 20) est (sont) en matière plastique.

14. Dispositif selon la revendication 13, caractérisé en ce que la matière plastique est le polystyrène.

15. Dispositif selon la revendication 13, caractérisé en ce que la matière plastique est un copolymère acrylonitrile-butadiène-styrène (ABS).

16. Dispositif selon la revendication 13, caractérisé en ce que la matière plastique est un copolymère styrène-acrylonitrile (SAN).
